# EUROPEAN PATENT SPECIFICATION

(11) **EP 0 653 285 B1**
(45) Date of publication and mention of the grant of the patent: **28.04.1999**
(21) Application number: 94308448.3
(22) Date of filing: 15.11.1994
(51) Int. Cl.: B29C 47/06, A23P 1/12, A23G 3/20

(54) **Coextrusion of multilayered food products**
Coextrusionsverfahren von mehrschichtigen Nahrungsmitteln
Coextrusion des produits alimentaires multicouches

(30) Priority: 15.11.1993 GB 9323530
(43) Date of publication of application: 17.05.1995
(73) Proprietor: UNITED BISCUITS (UK) LIMITED, West Drayton, Middlesex UB7 7PR (GB)
(72) Inventor: Barnes, Oliver John, High Wycombe, Bucks HP15 6BP (GB); Baldwin, Richard Thomas, Maidenhead, Berks SL6 3PX (GB); Dodson, Adrian Gerald, Guildford, Surrey GU2 5SN (GB)
(74) Representative: Humphreys, Ceris Anne

(56) References cited:
- EP-A- 0 032 629
- EP-A- 0 128 963
- EP-A- 0 492 894
- WO-A-91/03365
- BE-A- 816 279
- GB-A- 2 220 164
- US-A- 4 781 929

## Description

The invention relates to a method and apparatus for extruding a plurality of different food materials to form a multi-layered food product, for example, a confectionery item.

Extrusion is already used in the food industry to produce a single-layered product. It has also been proposed, for example, in GB 773,404, to coextrude three ribbons of ice cream of different colours or flavours. In that case of course the viscosity of the material in each layer is substantially the same and is relatively low, thus facilitating extrusion. Also each individual layer in a typical three-layer ice cream product is relatively thick (more than 1 cm thick). In GB 773,404 the different colours or flavours of ice cream are fed from different reservoirs through different impellers to different channels of the extrusion apparatus.

Where, however, it is desired to form a multi-layered product with layers of contrasting texture coextrusion has generally not been the chosen method. For example, in GB 2 108 363 a multi-layered ice confection product is formed by extruding individual layers through respective extruders and spraying food material (chocolate) onto the surface of each extruded layer before that surface is covered by the next layer. Similarly, GB 1 261 729 describes a method of manufacturing a confectionery product such as liquorice in which sheets of different food materials (liquorice paste and sugar paste) are formed by extrusion of the individual sheets and the sheets are then placed on top of one another to form a multi-layered assembly.

A problem with arrangements of the kind just described is that they require an undue amount of machinery which, when suitably arranged, takes up a large amount of space, especially when the final product is required to have many layers.

Further examples of prior art include US 4,781,929, EP 0 128 963 and GB 2 220 164.

US 4,781,929 describes a composite food product and an apparatus for producing such a food product. The apparatus comprises a central nozzle fed with one type of food material and two outer nozzles fed with another type of material. The food materials are co-extruded through the respective nozzles to form a three-layered food product.

EP 0 128 963 describes an apparatus for producing and packaging a multi-layered food product. Five compartments are filled with food materials, the two outer compartments and central compartment being filled via three respective pipes with one type of food material and the two other compartments being filled via two respective pipes with a different type of material. Once the compartments are full, the materials are ejected by five slidable ejection devices, thereby forming a five-layered food product.

An extrusion apparatus not relating to producing multi-layered food products is described in GB 2 220 164, which discloses an appartus for extrusion of laminated extrudates of thermoplasticised synthetic materials. The apparatus comprises three extruders, an entry block, a distribution block, an extrusion block and an exit nozzle tool. Three channels feed thermoplasticised material from each of the three extruders to the distribution block. In the distribution block those channels split into channels that form the channels of the extrusion block downstream.

It is an object of the invention to provide an improved method and apparatus for extruding a plurality of different food materials to form a multi-layered food product.

The invention provides a method of coextruding a multi-layered food product, the method comprising feeding a plurality of different food materials to an extrusion assembly having a multiplicity of juxtaposed channels in which method, food material passes from a region upstream of the channels into two or more channels of the extrusion assembly, the two or more channels being spaced apart from one another by one or more other channels, characterised in that the plurality of different food materials are fed to the extrusion assembly via a distributor means, the distributor means comprising a plurality of inlets, the inlets being adjacent to the upstream ends of the channels of the extrusion assembly and the method includes feeding the plurality of different food materials to respective inlets of the distributor means from where they pass through the distributor means into the channels of the extrusion assembly, the multiplicity of juxtaposed channels merge at a common outlet, and the food material fed to at least one of the inlets of the distributor means passes from there through the distributor means into the two or more channels that are spaced apart from one another by the one or more other channels.

By arranging for food material fed to a single inlet of the distributor means to be passed to two or more of the channels in the extrusion assembly, it becomes possible to form a multi-layered product using, for example, only two feed lines for feeding the food materials to the distributor means. Thus only a small amount of machinery is required and that machinery can be arranged to occupy only a small space. It has been found that by providing separate juxtaposed channels in the extrusion assembly it is possible to extrude food materials of different viscosities in adjacent channels so that it is possible to produce a multi-layered product in which adjacent layers are of contrasting texture.

The actual pattern of feeding of the different food materials to the various channels will depend on the product to be formed. The channels may themselves be arranged in a variety of patterns but it will usually be the case that at least some of the juxtaposed channels are placed side-by-side one after another, thus defining a column of channels (to either side of which there may or may not be further channels). In many cases, it will be preferred that the food material fed to at least one of the inlets of the distributor means passes from there through the distributor means into alternate channels of a column of channels that constitute at least some of the multiplicity of juxtaposed channels. In such a case there will usually be two different food materials with the other food material being fed into the other channels so that the adjacent layers of the product are alternately one food material and the other, but it is also possible for two or more different food materials to be received by the other channels.

The invention is of especial advantage when there are five or more channels in the extrusion assembly. With so many layers, it would be very demanding of space and equipment to have separate feed arrangements for each layer.

As already suggested, multi-layered products may have layers of contrasting texture and that usually also means that the food materials extruded to form the different layers are of different viscosities during extrusion. That could be expected to cause a problem during coextrusion but, to avoid or mitigate the problem, the different food materials may be fed to the distributor means at suitably chosen different pressures.

The food materials may be maintained at a temperature different from ambient temperature as they pass through the juxtaposed channels. Usually it will be desired to maintain the materials at a temperature above ambient temperature, but for certain applications it may be desirable to maintain them at a temperature below ambient temperature. Maintaining an elevated temperature can enable a food material that would be too viscous to extrude, or even that would be solid, at ambient temperature, to be extruded successfully. The food materials may be maintained at the desired temperature by a variety of means, for example, by fitting one or more electrical resistance heaters to the extrusion assembly (provided that the required temperature is above ambient temperature) or by placing a water jacket around part or all of the extrusion assembly; another option which may be employed instead of or in addition to the options already described is to put part or all of the apparatus in a temperature controlled environment, for example a heated cabinet. After extrusion the extrudate may be cooled and may then be cut up into appropriately sized blocks and/or subjected to any other desired treatments, for example, enrobing with chocolate, frying or baking.

Preferably the food materials pass from the common outlet of the juxtaposed channels through a nozzle which reduces the thickness of the layers. In a multi-layered product, it is likely that at least some of the layers will be required to be thin and, the thinner a layer, the more pressure is required to extrude it. Often, however, food materials can withstand only a limited pressure if they are not to be deleteriously affected. By providing channels of depths greater than the thicknesses required of the corresponding layers in the final product and then reducing the thicknesses of the layers by passing the materials through an appropriately shaped nozzle, the pressure required at the inlet to the extrusion apparatus is less than that which would be required if the depths of the channels were about the same as the thicknesses of the corresponding layers in the final product. By using deeper channels the likelihood of any channel clogging as a result of build up of solids in the channel is also reduced; such clogging is especially likely to occur in the case of a food material, for example, chocolate or batter incorporating solid particles.

While it is possible for the outlet of the nozzle to have a width greater than the channels, or even smaller than the channels, it is usually preferred that the width of the nozzle is substantially the same as the width of the channels.

The method of the invention may be employed to form a wide variety of food products but is especially applicable to food products that include chocolate. Whether or not another of the food materials is chocolate, one food material may be selected from the group comprising jam, truffle, fondant, caramel, toffee, blancmange, marshmallow, aerated chocolate, batter, fat creams, pumpable pastes and pumpable sauces.

The present invention also provides an extrusion apparatus for a multi-layered food product, the apparatus including
an extrusion assembly having a multiplicity of juxtaposed channels, two or more of the channels that are spaced apart from one another by one or more other channels being in fluid communication via a region upstream of the channels characterised in that the multiplicity of channels merge at a common outlet and the apparatus includes a distributor means having a plurality of inlets, the inlets of the distributor means being arranged adjacent to the upstream ends of the channels of the extrusion assembly, and through which inlets respective food materials are to be fed, wherein in respect of at least one of the inlets of the distributor means, two or more channels that are spaced apart from one another by one or more other channels are in fluid communication via fluid paths in the distributor means with the same distributor inlet.

The depth of each channel may vary along its length and indeed there may be advantages in arranging for the depth of the channel to increase progressively in a direction away from the outlet towards the inlet, especially if a relatively viscous material is to be extruded through the channel, so as to reduce the pressure from that which would be required to achieve the same final layer depth using channels of constant depth. On the other hand, there is an advantage from an engineering viewpoint in keeping the depth of each channel substantially constant along its length. Of course even when the depth of each channel is constant along its length, the individual depths of the different channels may be different to provide layers of different thickness in the extruded product.

Preferably, at least a substantial number of the layers are relatively thin and the width of the channels at their outlet is greater than the combined depths of the channels at their outlet. Usually all the channels will be of substantially the same width at their outlet; in a case where different channels have different widths the "width" of the channels is to be understood as meaning the combined width of all the channels divided by the number of channels.

At least some of the layers in the product of the method and apparatus of the invention may be thin, having a depth of less than 5 mm. Usually none of the layers will be especially thick and the average thickness of each layer will be less than 10 mm, the average thickness of each layer being understood as meaning the combined thickness of all the layers divided by the number of layers. In the case where a nozzle is provided the depth of the channels may be substantially greater than the depth of the layers in the product.

The width of each channel may be constant along its length but it may also be advantageous, especially if food material is fed into the channel over a relatively small width compared to the width of the outlet of the channel, for the width of each channel to increase progressively from its inlet to its outlet. Such an arrangement promotes even flow of the food material across the width of the channel.

The length of each channel should not be such as to require such a high pressure at the inlet to the extrusion assembly that the food material is deleteriously affected but should be sufficiently long to result in a flow of substantially uniform velocity across the channel at the outlet end thereof. Increasing the length of a channel promotes more uniform flow across the channel at the outlet end both by reducing the difference in distance of different parts of the outlet of the channel from the inlet and by reducing the deleterious effect on uniformity of any localized variation in resistance to flow within a channel. Thus, it is preferred that the length of the channels is greater than the width of the channels at their outlet. Usually all the channels will be of substantially the same length; in a case where there is a variation in the lengths of the channels, the "length" of the channels is to be understood as meaning the combined length of all the channels divided by the number of channels.

Preferably, the channels are defined by adjacent plates of a stack of spaced plates secured together in an assembly. The stack of spaced plates, which are preferably very thin, define absolute boundaries to each channel while allowing adjacent channels to be very close together. In the case referred to above, where the channels are of constant depth, the plates will be parallel.

The plates are preferably clamped together with seals clamped between the plates and extending along opposite side edges of the plates. Such an arrangement is easily manufactured from simple parts. Preferably the plates are releasably clamped together, enabling them to be very easily disassembled for cleaning or replacement of a component.

The distributor means preferably comprises a plurality of distributors each having an inlet and a plurality of outlets which provide paths of fluid communication between the distributor inlet and a plurality of the multiplicity of channels. With such a distributor means it is possible to feed each of the plurality of food materials to a respective distributor which then determines the channels to which each food material is fed. Usually it will be preferred that each channel is in communication with only one inlet of the distributor means; thus each channel receives only one food material. It is, however, possible to have a channel in communication with more than one inlet of the distributor means so that different food materials are fed into different regions of the same channel. In that case there will be a variation in the composition of a layer of the extruded product across the width of the layer which may add interest to the final product.

Various forms of apparatus and methods in accordance with the invention for extruding a multi-layered food product will now be described, by way of example, with reference to the accompanying drawings, of which:
- Fig. 1: is a schematic perspective view of an extrusion assembly,
- Fig. 2A: is a plan view of a first form of apparatus for extruding a multi-layered food product, the apparatus being shown without a nozzle;
- Fig. 2B: is an end view of the apparatus of Fig. 2A showing the outlet end of the apparatus;
- Fig. 2C: is a plan view of a blanking plate forming part of the apparatus of Fig. 2A;
- Fig. 2D: is a side view of the apparatus of Fig. 2A, the apparatus being shown with the nozzle fitted but without inlet connectors;
- Fig. 3A: is a schematic plan view of a first modified form of blanking plate that may be used in a first modified form of the apparatus of Figs. 2A to 2D;
- Fig. 3B: shows schematically the form of a product of the first modified form of the apparatus;
- Fig. 3C: is a schematic plan view of part of the first modified form of the apparatus;
- Fig. 4A: is a schematic plan view of a second modified form of blanking plate that may be used in a second modified form of the apparatus of Figs. 2A to 2D;
- Fig. 4B: shows schematically the form of a product of the second modified form of the apparatus;
- Fig. 4C: is a schematic plan view of part of the second modified form of the apparatus;
- Fig. 5: is a schematic view of the outlet end of the apparatus of Fig. 2A showing a modification that may be made to the apparatus; and
- Fig. 6: is a front end view of a second form of apparatus for extruding a multi-layered product, the apparatus being shown without a nozzle.

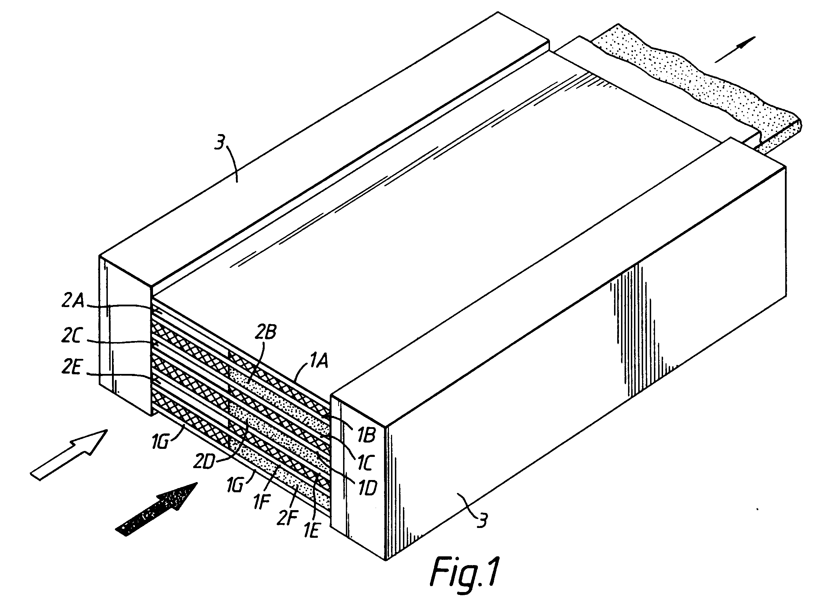

The extrusion assembly shown schematically in Fig. 1 of the accompanying drawings for the purpose of illustrating the principle of operation has seven parallel plates 1A to 1G between which are defined six channels 2A to 2F. The plates are held in position by a pair of mounting blocks 3 which extend along opposite sides of the plates and also define the side walls of the channels. A distributor means (not shown in Fig. 1) is attached to the upstream end of the assembly and controls the feeding of two food materials into respective parts of the assembly as shown by the arrows.

A first food material is fed into the left hand side (as seen in Fig. 1) of the assembly as indicated by the white arrow and a second food material is fed into the right hand side (as seen in Fig. 1) as indicated by the black arrow. The distributor allows the first food material to enter channels 2A, 2C and 2E but blanks off channels 2B, 2D and 2F so that none of the first food material enters those channels. On the other hand, the distributor allows the second food material to enter channels 2B, 2D and 2F but blanks off channels 2A, 2C and 2E so that none of the second food material enters those channels. As each food material passes down a channel it spreads to extend across the entire width of the channel. Thus, at the outlet end of the assembly a six-layered product is extruded, each of the layers extending across the entire width of the channels, with adjacent layers of the extrudate being alternately the first food material and the second food material. The first food material is, for example, marshmallow, and the second food material is, for example, chocolate. In the example illustrated in the drawing the channels 2A, 2C and 2E are all the same depth and the channels 2B, 2D and 2G are the same depth as each other but deeper than the channels 2A, 2C and 2E.

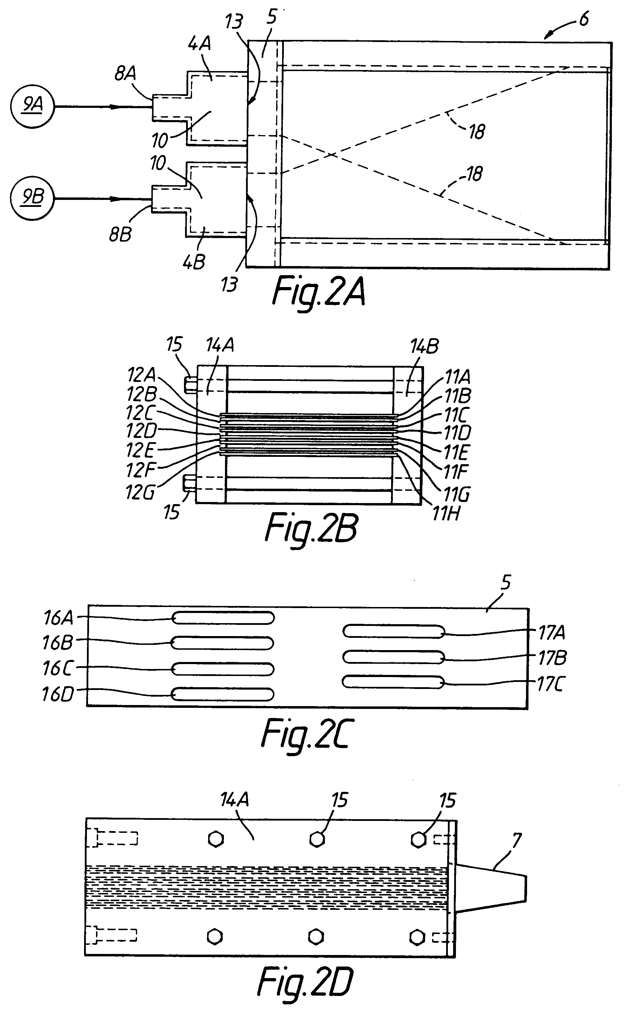

Figs. 2A to 2D show a first, prototype apparatus that has been used in trials. The apparatus comprises a distributor means comprising a pair of inlet connectors 4A, 4B and a blanking plate 5, an extrusion assembly which is indicated generally by the reference numeral 6 and in which seven channels 12A to 12G are formed, and a nozzle 7 (shown only in Fig. 2D). As shown in Fig. 2A, each of the inlet connectors 4A and 4B has an inlet port 8A or 8B, respectively, which are separately connected by pipework to pumped feeds 9A and 9B, respectively, of different food materials. Each inlet connector 4A, 4B has an internal chamber 10 that extends from the inlet port 8A, 8B to the opposite end of the connector which is open forming an outlet 13.

The inlet connectors 4A, 4B are fixed, for example, by bolts (not shown), to respective regions of the blanking plate 5, with the end faces of the connectors that contain the outlets 13 pressed against one face of the blanking plate 5. The opposite face of the blanking plate is pressed against the inlet end of the extrusion assembly 6 and covers over the ends of all the channels 12A to 12G in the assembly. Without the blanking plate 5 each of the outlets 13 of the inlet connectors 4A, 4B would be in fluid communication with all the channels 12A to 12G in the extrusion assembly 6.

The extrusion assembly 6 comprises eight parallel plates 11A to 11H which define the walls of the channels 12A to 12G. The plates 11A to 11H are fixed along their opposite side edges in mounting blocks 14A and 14B which have machined grooves to accept side edge portions of the plates and are clamped together by bolts 15 thereby securing the plates 11A to 11H in position and providing side walls to each of the channels. The blanking plate 5 has machined grooves on the face that is pressed against the extrusion assembly 6 to accept adjacent end portions of the plates 11A to 11H.

The blanking plate 5 has two sets of apertures (see Fig. 2C) extending through the plate from the face pressed against the outlets 13 of the connectors 4A, 4B to the face pressed against the plates 11A to 11H. A first set of four apertures 16A to 16D is provided in the plate 5 within the area of the outlet 13 of the connector 4A. The apertures 16A to 16D are aligned with and therefore communicate with the channels 12A, 12C, 12E and 12G respectively. A second set of three apertures 17A to 17C is provided in the plate 5 within the area of the outlet 13 of the connector 4B. The apertures 17A to 17C are aligned with and therefore communicate with the channels 12B, 12D and 12F, respectively.

As shown in Fig. 2D, the nozzle 7 is attached to the extrusion assembly 6 at its outlet end and comprises a rectangular duct whose width is constant but whose depth decreases continuously from an initial depth corresponding to the internal spacing of the outermost plates 11A to 11H to a final depth at its outlet which in the particular example illustrated is about one half the initial depth.

In use, a first food material I is fed from a pumped feed 9A to the inlet port 8A of the inlet connector 4A and a second food material II is fed from a pumped feed 9B to the inlet port 8B of the inlet connector 4B. Food material I passes through the passageway 10 and the outlet 13 of the inlet connector 4A and through the apertures 16A to 16D in the blanking plate 5 into the channels 12A, 12C, 12E and 12G. Food material II passes through the passageway 10 and the outlet 13 of the inlet connector 4B and through the apertures 17A to 17C in the blanking plate 5 into the channels 12B, 12D and 12F. Food materials I and II then pass through their respective channels and merge at the common outlet of those channels forming a multi-layer intermediate product which then passes through the nozzle 7 reducing the thickness of each of the layers.

The multi-layered extrudate that emerges from the nozzle 7 may be cut into blocks of the required size for the product.

The following Example illustrates the invention:

### EXAMPLE

Using the apparatus shown in Figs. 2A to 2D, melted chocolate was supplied from feed 9A and freshly prepared marshmallow was supplied from the feed 9B. The melted chocolate was pumped at a rate of about 598 g/min and a temperature of about 40°C into the inlet port 8A of the connector 4A and the marshmallow was pumped at a rate of about 485 g/min and a temperature of about 28°C into the inlet port 8B of the connector 4B.

The width of the plates 11A to 11H, which were made of 2 mm thick steel, was 175 mm and the length of the plates was 340 mm. The depth of the channels 12A, 12C, 12E and 12G through which the chocolate passed was 3 mm and the depth of the channels 12B, 12D and 12F through which the mallow passed was 5 mm. The width of the nozzle was the same as the width of the channels. The depth of the nozzle outlet was about 18 mm.

As the extruded product emerged from the nozzle it was travelling approximately horizontally but with a slight downward inclination and was collected on a moving conveyor. The temperature of the product as it emerged from the nozzle was about 30°C. The product produced had four layers of chocolate, each about 1.0 to 1.5 mm thick and three layers of mallow each about 4.0 mm thick.

The density of the melted chocolate was about 1250 kg/m³. The density of the marshmallow was different at different stages of the process: the density was measured, when initially prepared at 450 kg/m³, at 532 kg/m³ on entry to the inlet port 8A and at 540 kg/m³ after extrusion.

The flow characteristics of both the chocolate and the marshmallow were also measured as described below.

The viscosity of the chocolate was measured in a Haake RV2 viscometer with a D8 Water Bath system. The viscometer has an inner cylinder which rotates inside a concentric cylindrical chamber with the chocolate in the annular gap between the parts. The torque on the inner cylinder is used to derive a viscosity value. The viscosity of the melted chocolate was measured at a temperature of 40°C at two shear rates: at a shear rate of 12 s⁻¹ the viscosity was 85-90 Poise and at a shear rate of 60 s⁻¹ the viscosity was 50-55 Poise.

In the case of marshmallow such a viscosity measurement is not appropriate because the measurement process itself affects the marshmallow and alters its viscosity. Accordingly a back extrusion test is used to measure the flow characteristics of the marshmallow. The test comprises placing a sample of the material to be tested in a cylindrical plastic cup, having an internally bevelled open top. A plunger having a flat circular base is caused to move down within the cup so that the material to be tested is forced to flow upwards through the annular gap between the periphery of the plunger and inner cylindrical surface of the cup.

The cylindrical cup has the following dimensions: external height 75 mm, height of base 5 mm, internal height from upper surface of base to bottom of bevel 66 mm, external diameter 60 mm, internal diameter below bevel 50 mm and internal diameter at top 57 mm. The plunger has a diameter of 45 mm and a height of 6 mm.

The plunger, which is coaxial with the cup, can be caused to move vertically downwards at a controlled speed and the average resistance encountered by the plunger ascertained. A suitable instrument for that purpose is an instrument known as the Stable Micro Systems Universal TA-XT2 Texture Analyser.

When carrying out the test, a test speed of 5 mm/s is selected. The instrument then causes the plunger to move downwards, towards the upper surface of the material to be tested, at a speed of 2 mm/s. When the plunger meets the material, it experiences an upward force and, at the position at which the magnitude of the upward force reaches 5 grammes weight (that position being referred to below as "the trigger point"), the speed of movement of the plunger changes to the selected test speed of 5 mm/s. The plunger continues to move downwards until it has penetrated the coating material to a depth of 35 mm from the trigger point. The resistance encountered by the plunger during its downward movement is measured by the instrument and the average force over the 33 mm of travel of the plunger from a point 2 mm below the trigger point to a point 35 mm below the trigger point is taken as a measure of the flow characteristics of the material.

Using the test just described the flow characteristics of the freshly prepared marshmallow were measured at a temperature of 31°C and found to be 1.84 kg.

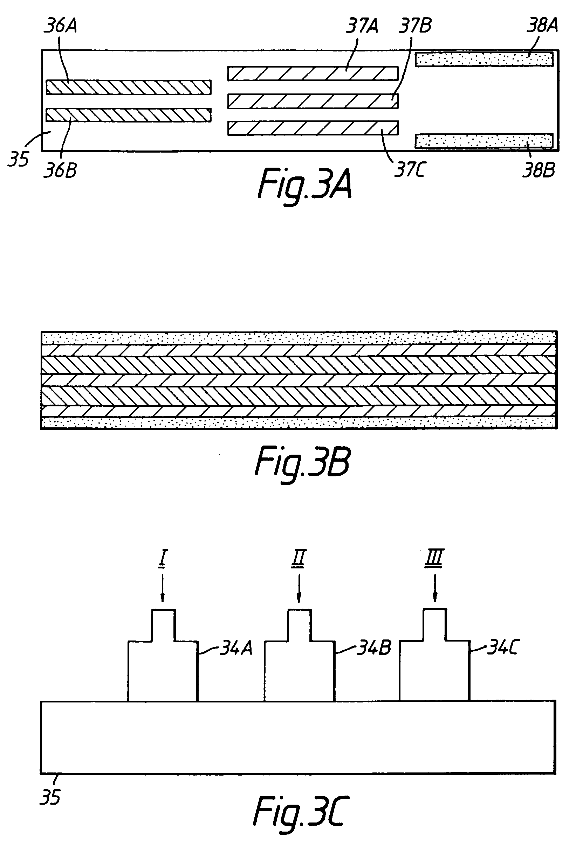

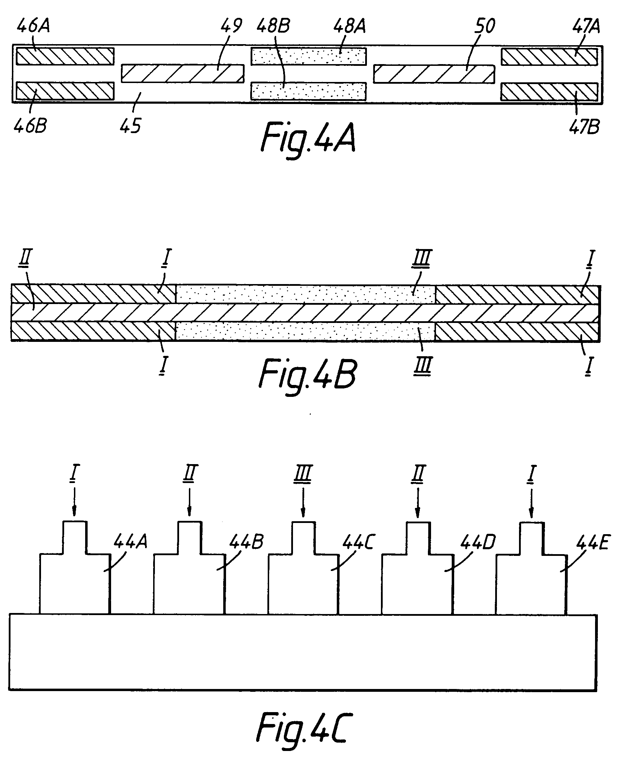

Using the blanking plate 5 shown in Fig. 2C produces a seven-layered product in which layers of a first food material alternate with layers of a second food material and each layer is composed of only one of the food materials. By using a different blanking plate, however, it is possible to produce different configurations of product as will now be further described with reference to Figs. 3A to 3C and Figs. 4A to 4C.

The blanking plate 35 shown in Fig. 3A has three sets of apertures and is used in conjunction with three inlet connectors 34A, 34B, 34C (see Fig. 3C), each of which connectors is of the same construction as the inlet connectors 4A, 4B.

Inlet connectors 34A, 34B and 34C are connected to separate pumped feeds for food materials I, II and III, respectively. The extrusion assembly (not shown) to which the inlet connectors 34A to 34C and the blanking plate 35 are connected is substantially the same as the assembly described with reference to Figs. 2A to 2D.

A first set of two apertures 36A and 36B is provided in the plate 35 within the area of the outlet 13 of the connector 34A. The apertures 36A and 36B are aligned with and therefore communicate with the channels 12C and 12E, respectively, in the extrusion assembly. A second set of three apertures 37A to 37C is provided on the plate 35 within the area of the outlet 13 of the connector 34B. The apertures 37A to 37C are aligned with and therefore communicate with the channels 12B, 12D and 12F, respectively. A third set of two apertures 38A and 38B is provided in the plate 35 within the area of the outlet 13 of the connector 34C. The apertures 38A and 38B are aligned with and therefore communicate with the channels 12A and 12F, respectively.

As will be understood from the foregoing description, the intermediate product produced from the apparatus incorporating the blanking plate of Fig. 3A and the extrusion assembly is as shown in Fig. 3B. The seven-layered product has outermost layers of food material III adjacent to which are layers of food material II. Inside those layers of food material II are layers of food material I which are in turn separated by a middle layer of food material II. The relative depths of the layers is of course determined by the separation of the plates of the extrusion assembly and in the example shown in Fig. 3B, the separation of the plates is chosen such that the two layers of food material I are deeper than the other layers.

The blanking plate 45 shown in Fig. 4A has five sets of apertures and is used in conjunction with five inlet connectors 44A to 44E (see Fig. 4C), each of which connectors is of the same construction as the inlet connectors 4A, 4B. Inlet connectors 44A and 44E are connected to a pumped feed for food material I, inlet connectors 44B and 44D are connected to a pumped feed for food material II and inlet connector 44C is connected to a pumped feed for food material III. The extrusion assembly (not shown) to which the inlet connectors 44A to 44E and the blanking plate 45 are connected is similar to the assembly 6 described with reference to Figs. 2A to 2D, but comprises only four plates defining the walls of three channels.

A first set of two apertures 46A and 46B is provided in the plate 45 within the area of the outlet 13 of the connector 44A and a second set of two apertures 47A and 47B is provided in the plate 45 within the area of the outlet 13 of the connector 44E. The connectors 44A and 44E are situated at opposite sides of the extrusion assembly. The apertures 46A and 47A are aligned with and therefore communicate with one of the outer channels of the extrusion assembly while the apertures 46B and 47B are aligned with and therefore communicate with the other outer channel of the extrusion assembly.

A third set of two apertures 48A and 48B is provided in the plate 45 within the area of the outlet 13 of the connector 44C, which is situated at the centre of the inlet end of the extrusion assembly. The apertures 48A and 48B are aligned with and therefore communicate with different outer channels of the extrusion assembly.

A fourth aperture 49 is provided in the plate 45 within the area of the outlet 13 of the connector 44B and a fifth aperture 50 is provided in the plate 45 within the area of the outlet 13 of the connector 44D. The connector 44B is situated between the connectors 44A and 44C whilst the connector 44D is situated between the connectors 44C and 44E. The apertures 49 and 50 are both aligned with and therefore both communicate with the middle channel of the extrusion assembly.

As will be understood from the foregoing description, the intermediate product produced from the apparatus incorporating the blanking plate of Fig. 4A and the extrusion assembly is as shown in Fig. 4B. The product has a middle layer consisting exclusively of food material II and outer layers, each of which has a central portion consisting of food material III and side portions consisting of food material I. Two inlet connectors 44B and 44D are provided for food material II for the purpose of providing a more even flow of that material through the middle channel of the extrusion assembly. As a result of feeding both materials I and III to each of the outer channels the composition of each of the outer layers is caused to vary across the width of each layer.

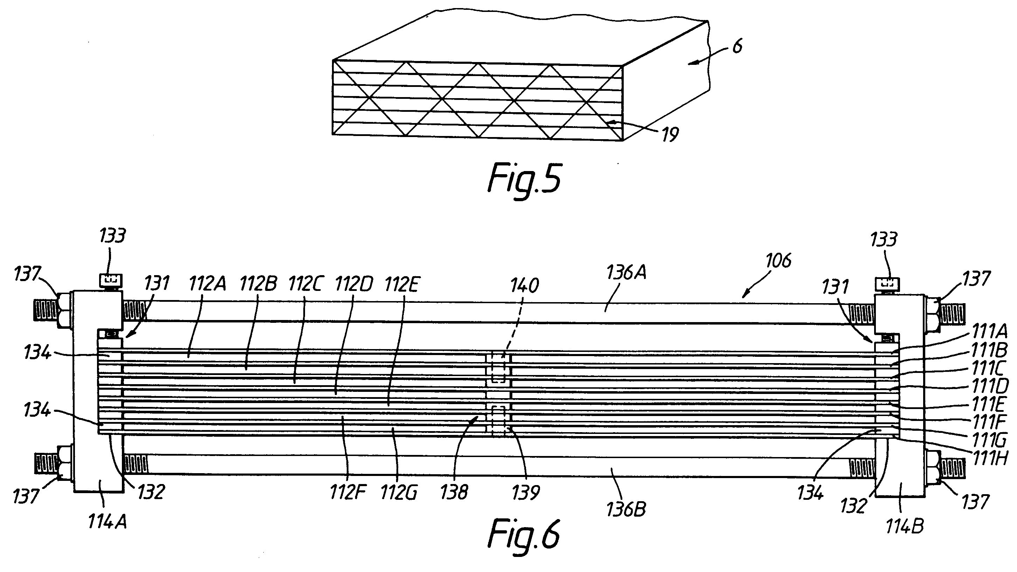

With the various forms of apparatus described above, the boundaries of adjacent layers of the product that have passed through different channels are clearly defined: until the materials pass beyond the plates of the extrusion assembly, the layers are kept entirely separate; although some migration of food material from one layer into another is likely to occur as the extruded product passes through the nozzle 5 that migration will be very limited. In a case where it is desirable to have less clearly defined layers it is possible to introduce means such as that shown schematically in Fig. 5 to disrupt the flow of the product. In Fig. 5 deflectors 19 are shown mounted over the outlet end of the extrusion assembly 6; in the embodiment illustrated the deflectors 19 are simply in the form of cross-wires, but it should be understood that they may take any suitable form according to the degree of transfer of material from one layer to another that is desired.

Referring now to Fig. 6, there is shown an alternative form of extrusion assembly 106 which is designed to be especially simple to manufacture and to dismantle for cleaning or replacement of any of its constituent parts. The assembly 106 comprises a stack of eight plates 111A to 111H held in parallel spaced apart relationship between a pair of mounting blocks 114A and 114B. Each mounting block 114A, 114B has an internal recess 131 at one end of which a shoulder 132 is defined and into the other end of which the ends of clamping screws 133 (only one of which is visible for each mounting block in Fig. 6), that are in screw-threaded engagement with the mounting block, project. The plate 111H rests on the shoulders 132 of each mounting block, a gasket strip 134 rests on the plate 111H in each of the recesses 131 and the plate 111G rests on the strips 134. That arrangement is repeated with further gasket strips 134 and the plates 111A to 111F. The clamping screws 133 are clamped against the last pair of gasket strips 134, thereby clamping all the plates together with the seals along their side edges. The thicknesses of the gasket strips 134 determine the spacing of the plates.

The mounting blocks 114A and 114B are also held in fixed relationship to one another by two or more pairs of lateral clamping rods 136A and 136B (only one pair being visible in Fig. 6) whose ends are threaded and receive nuts 137.

Also shown in Fig. 6 is a central longitudinal seal arrangement 138 comprising a further series of gasket strips 139 which extend between the plates 111A to 111H along their centrelines. The strips 139A to 139G and the plates 111A to 111H have aligned bores to receive bolts 140 which clamp the plates together along their centrelines. The use in Fig. 6 of the centre gasket makes the extrusion assembly 106 in effect two parallel assemblies each of which requires a complete arrangement for the supply of food materials. By using such an arrangement a wider final product can be obtained. Thus, following the example of the apparatus of Figs. 2A to 2D, there would be two inlet connectors 104A and 104B feeding food materials I and II via a blanking plate 105 to respective channels on one side of the seal arrangement 138 and two further inlet connectors 104A' and 104B' feeding food materials I and II via the same blanking plate 105 to the same respective channels on the other side of the seal arrangement.

The channels defined on either side of the seal arrangement 138 merge at the outlet of the extrusion assembly 106 and a single nozzle (not shown) is attached to the extrusion assembly 106 at its outlet end. The seal arrangement 138 is provided partly to impart strength and rigidity to the extrusion assembly and may, if desired, terminate short of the outlet end of the assembly.

## Claims

1. A method of coextruding a multi-layered food product, the method comprising feeding a plurality of different food materials to an extrusion assembly (6) having a multiplicity of juxtaposed channels (12A to 12G) in which method, food material passes from a region upstream of the channels into two or more channels (12A,12C,12E,12G) of the extrusion assembly, the two or more channels being spaced apart from one another by one or more other channels (12B,12D,12F), characterised in that the plurality of different food materials are fed to the extrusion assembly (6) via a distributor means (4A,4B,5), the distributor means comprising a plurality of inlets (8A,8B), the inlets being adjacent to the upstream ends of the channels of the extrusion assembly and the method includes feeding the plurality of different food materials to respective inlets (8A,8B) of the distributor means from where they pass through the distributor means (4A,4B,5) into the channels (12A to 12G) of the extrusion assembly, the multiplicity of juxtaposed channels merge at a common outlet, and the food material fed to at least one (8A) of the inlets (8A,8B) of the distributor means passes from there through the distributor means into the two or more channels (12A,12C,12E,12G) that are spaced apart from one another by the one or more other channels (12B,12D,12F).

2. A method as claimed in claim 1 in which the food material fed to at least one (8A) of the inlets (8A,8B) of the distributor means (4A,4B,5) passes from there through the distributor means into alternate channels (12A,12C,12E,12G) of a column of channels that constitute at least some of the multiplicity of juxtaposed channels (12A to 12G).

3. A method as claimed in claim 1 or 2 in which there are two different food materials.

4. A method as claimed in any preceding claim in which there are five or more channels (12A to 12G) in the extrusion assembly (6).

5. A method as claimed in any preceding claim in which the different food materials are fed to the distributor means (4A,4B,5) at different pressures.

6. A method as claimed in any preceding claim in which the food materials are maintained at a temperature different from ambient temperature as they pass through the juxtaposed channels (12A to 12G).

7. A method as claimed in any preceding claim in which the food materials pass from the common outlet of the juxtaposed channels through a nozzle (7) which reduces the thickness of the extruded layers.

8. A method as claimed in any preceding claim in which one of the food materials is chocolate.

9. A method as claimed in any preceding claim in which one of the food materials is selected from the group comprising jam, truffle, fondant, caramel, toffee, blancmange, marshmallow, aerated chocolate, batter, fat creams, pumpable pastes and pumpable sauces.

10. A method as claimed in any preceding claim in which the depth of each channel (12A to 12G) is substantially constant along its length.

11. A method as claimed in any preceding claim in which the width of the channels (12A to 12G) at their outlet is greater than the combined depths of the channels at their outlet.

12. A method as claimed in any preceding claim in which the length of the channels (12A to 12G) is greater than the width of the channels at their outlet.

13. An extrusion apparatus for a multi-layered food product, the apparatus including
an extrusion assembly (6) having a multiplicity of juxtaposed channels (12A to 12G), two or more of the channels (12A,12C,12E,12G) that are spaced apart from one another by one or more other channels (12B,12D,12F) being in fluid communication via a region upstream of the channels characterised in that the multiplicity of channels merge at a common outlet and the apparatus includes a distributor means (4A,4B,5) having a plurality of inlets (8A,8B), the inlets of the distributor means being arranged adjacent to the upstream ends of the channels of the extrusion assembly (6), and through which inlets (8A,8B) respective food materials are to be fed, wherein in respect of at least one of the inlets (8A,8B) of the distributor means, two or more channels (12A,12C,12E,12G) that are spaced apart from one another by one or more other channels (12B,12D,12F) are in fluid communication via fluid paths in the distributor means (4A,4B,5) with the same distributor inlet (8A).

14. An apparatus as claimed in claim 13 in which alternate channels (12A,12C,12E,12G) are in fluid communication via the distributor means (4A,4B,5) with the same distributor inlet (8A).

15. An apparatus as claimed in claim 13 or 14 in which there are five or more channels (12A to 12G) defined in the extrusion assembly (6).

16. An apparatus as claimed in any one of claims 13 to 15 further including heating means for maintaining the temperature of the extrusion assembly (6) at a temperature above ambient temperature.

17. An apparatus as claimed in any one of claims 13 to 16 further including a nozzle (7) which is shaped to reduce the thickness of the extruded layers.

18. An apparatus as claimed in claim 17 in which the width of the nozzle (7) is substantially the same as the width of the channels (12A to 12G).

19. An apparatus as claimed in any one of claims 13 to 18 in which the depth of each channel (12A to 12G) is substantially constant along its length.

20. An apparatus as claimed in any one of claims 13 to 19 in which the width of the channels (12A to 12G) at their outlet is greater than the combined depths of the channels at their outlet.

21. An apparatus as claimed in any one of claims 13 to 20 in which the length of the channels (12A to 12G) is greater than the combined depths of the channels at their outlet.

22. An apparatus as claimed in any one of claims 13 to 21 in which the channels (12A to 12G) are defined between adjacent plates of a stack of spaced plates (11A to 11H) secured together in an assembly.

23. An apparatus as claimed in any one of claims 13 to 22 in which the plates (11A to 11H) are clamped together with seals clamped between the plates and extending along opposite side edges of the plates.

24. An apparatus as claimed in claim 23 in which the plates (11A to 11H) are releasably clamped together.

25. An apparatus as claimed in any one of claims 13 to 24 in which the distributor means (4A,4B,5) comprises a plurality of distributors each having an inlet (8A,8B) and a plurality of outlets (16A to 16D, 17A to 17C) which provide paths of fluid communication between the distributor inlet and a plurality of the multiplicity of channels (12A to 12G).

26. An apparatus as claimed in any one of claims 13 to 25 in which each channel (12A to 12G) is in communication with only one inlet (8A,8B) of the distributor means (4A,4B,5).

## Patentansprüche

1. Verfahren zum Koextrudieren eines mehrschichtigen Nahrungsmittelprodukts, wobei das Verfahren das Zuführen einer Vielzahl von unterschiedlichen Nahrungsmittelmaterialien zu einer Extrusionsanordnung (6) umfaßt, die eine Vielzahl von nebeneinander angeordneten Kanälen (12A bis 12G) aufweist, bei welchem Verfahren Nahrungsmittelmaterial aus einem Bereich stromaufwärts der Kanäle in zwei oder mehr Kanäle (12A, 12C,12E,12G) der Extrusionsanordnung geführt wird, wobei die zwei oder mehr Kanäle voneinander durch jeweils einen oder mehrere andere Kanäle (12B,12D,12F) getrennt sind, dadurch gekennzeichnet, daß die Vielzahl von unterschiedlichen Nahrungsmittelmaterialien der Extrusionsanordnung (6) über ein Verteilermittel (4A,4B,5) zugeführt werden, wobei das Verteilermittel eine Vielzahl von Einlässen (8A,8B) umfassen, wobei die Einlässe benachbart zu den stromaufwärtigen Enden der Kanäle der Extrusionsanordnung sind, und das Verfahren ein Zuführen der Vielzahl von unterschiedlichen Nahrungsmittelmaterialien zu entsprechenden Einlässen (8A,8B) des Verteilermittels umfaßt, von wo sie durch das Verteilermittel (4A,4B,5) in die Kanäle (12A bis 12G) der Extrusionsanordnung geführt werden, die Vielzahl von nebeneinander befindlichen Kanälen an einem gemeinsamen Auslaß verlassen und das wenigstens einem (8A) der Einlässe (8A,8B) des Verteilermittels zugeführte Nahrungsmittelmaterial von dort durch das Verteilermittel in die zwei oder mehr Kanäle (12A, 12C,12E,12G) geführt wird, die voneinander durch einen oder mehrere andere Kanäle (12B,12D,12F) beabstandet sind.

2. Verfahren nach Anspruch 1, bei dem das wenigstens einem (8A) der Einlässe (8A,8B) des Verteilermittels (4A,4B,5) zugeführte Nahrungsmittelmaterial von dort durch das Verteilermittel in abwechselnde Kanäle (12A,12C,12E,12G) einer Säule von Kanälen geführt wird, die wenigstens einige der Vielzahl von benachbarten Kanälen (12A bis 12G) bilden.

3. Verfahren nach Anspruch 1 oder 2, bei dem es zwei verschiedene Nahrungsmittelmaterialien gibt.

4. Verfahren nach einem vorhergehenden Anspruch, bei dem es fünf oder mehr Kanäle (12A bis 12G) in der Extrusionsanordnung (6) gibt.

5. Verfahren nach einem vorhergehenden Anspruch, bei dem die verschiedenen Nahrungsmittelmaterialien in das Verteilermittel (4A,4B,5) mit unterschiedlichen Drücken zugeführt werden.

6. Verfahren nach einem vorhergehenden Anspruch, bei dem die Nahrungsmittelmaterialien auf einer Temperatur unterschiedlich von der Umgebungstemperatur gehalten werden, wenn sie durch die benachbarten Kanäle (12A bis 12G) geführt werden.

7. Verfahren nach einem vorhergehenden Anspruch, bei dem die Nahrungsmittelmaterialien durch den gemeinsamen Auslaß der benachbarten Kanäle über eine Düse (7) geführt werden, die die Dicke der extrudierten Schichten reduziert.

8. Verfahren nach einem vorhergehenden Anspruch, bei dem eines der Nahrungsmittelmaterialien Schokolade ist.

9. Verfahren nach einem vorhergehenden Anspruch, bei dem eines der Nahrungsmittelmaterialien ausgewählt ist aus der Gruppe umfassend Marmelade, Trüffel, Zuckerwerk, Karamel, Sahnekaramel, Blancmange, Marshmallow, geschäumte Schokolade, Eiweißmasse, Buttercreme, pumpbare Pasten und pumpbare Soßen.

10. Verfahren nach einem vorhergehenden Anspruch, bei dem die Tiefe jedes Kanals (12A bis 12G) im wesentlichen auf seiner Länge konstant ist.

11. Verfahren nach einem vorhergehenden Anspruch, bei dem die Breite der Kanäle (12A bis 12G) an ihrem Auslaß größer als die Gesamttiefe der Kanäle an ihrem Auslaß ist.

12. Verfahren nach einem vorhergehenden Anspruch, bei dem die Länge der Kanäle (12A bis 12G) größer als die Breite der Kanäle an ihrem Auslaß ist.

13. Extrusionsvorrichtung für ein mehrschichtiges Nahrungsmittelprodukt, wobei die Vorrichtung
eine Extrusionsanordnung (6) mit einer Vielzahl von benachbarten Kanälen (12A bis 12G) umfaßt, wobei zwei oder mehr Kanäle (12A, 12C,12E,12G) voneinander durch einen oder mehrere andere Kanäle (12B, 12D,12F), die über einen stromaufwärtigen Bereich der Kanäle in Fluidkommunikation miteinander stehen, getrennt sind, dadurch gekennzeichnet, daß die Vielzahl von Kanälen an einem gemeinsamen Auslaß münden und die Vorrichtung ein Verteilermittel (4A,4B,5) umfaßt, das eine Vielzahl von Einlässen (8A,8B) besitzt, wobei die Einlässe des Verteilermittels benachbart zu den stromaufwärtigen Enden der Kanäle der Extrusionsanordnung (6) angeordnet sind und durch welche Einlässe (8A,8B) entsprechende Nahrungsmittelmaterialien zu führen sind, wobei in bezug auf wenigstens einen der Einlässe (8A,8B) des Verteilermittels zwei oder mehr Kanäle (12A,12C,12E,12G), die voneinander durch einen oder mehrere andere Kanäle (12B,12D,12F) voneinander getrennt sind, über Fluidwege in dem Verteilermittel (4A,4B,5) mit dem gleichen Verteilereinlaß (8A) in Fluidkommunikation stehen.

14. Vorrichtung nach Anspruch 13, bei der abwechselnde Kanäle (12A,12C,12E,12G) über das Verteilermittel (4A,4B,5) mit dem gleichen Verteilereinlaß (8A) in Fluidkommunikation stehen.

15. Vorrichtung nach Anspruch 13 oder 14, bei der fünf oder mehr Kanäle (12A bis 12G) in der Extrusionsanordnung (6) vorgesehen sind.

16. Vorrichtung nach einem der Ansprüche 13 bis 15, weiter umfassend Heizmittel zum Halten der Temperatur der Extrusionsanordnung (6) auf einer Temperatur oberhalb Umgebungstemperatur.

17. Vorrichtung nach einem der Ansprüche 13 bis 16, weiter umfassend eine Düse (7), die geformt ist, um die Dicke der extrudierten Schichten zu reduzieren.

18. Vorrichtung nach Anspruch 17, bei der die Breite der Düse (7) im wesentlichen gleich der Breite der Kanäle (12A bis 12G) ist.

19. Vorrichtung nach einem der Ansprüche 13 bis 18, bei der die Tiefe jedes Kanals (12A bis 12G) im wesentlichen längs seiner Länge konstant ist.

20. Vorrichtung nach einem der Ansprüche 13 bis 19, bei der die Breite der Kanäle (12A bis 12G) an ihrem Auslaß größer als die Gesamttiefe der Kanäle an ihrem Auslaß ist.

21. Vorrichtung nach einem der Ansprüche 13 bis 20, bei der die Länge der Kanäle (12A bis 12G) größer als die Gesamttiefe der Kanäle an ihrem Auslaß ist.

22. Vorrichtung nach einem der Ansprüche 13 bis 21, bei der die Kanäle (12A bis 12G) zwischen benachbarten Platten eines Stapels von beabstandeten Platten (11A bis 11H) gebildet sind, die in einer Anordnung aneinander befestigt sind.

23. Vorrichtung nach einem der Ansprüche 13 bis 22, bei der die Platten (11A bis 11H) unter Zwischenschaltung von Dichtungen zusammengeklemmt sind, wobei die Dichtungen zwischen den Platten eingeklemmt sind und sich entlang gegenüberliegender Seiten der Platten erstrecken.

24. Vorrichtung nach Anspruch 23, bei der die Platten (11A bis 11H) lösbar zusammengeklemmt sind.

25. Vorrichtung nach einem der Ansprüche 13 bis 24, bei der das Verteilermittel (4A,4B,5) eine Vielzahl von Verteilern, die jeweils einen Einlaß (8A,8B) besitzen, und eine Vielzahl von Auslässen (16A bis 16D, 17A bis 17C) umfaßt, die Pfade zur Fluidkommunikation zwischen dem Verteilereinlaß und einer Vielzahl der Mehrzahl von Kanälen (12A bis 12G) liefern.

26. Vorrichtung nach einem der Ansprüche 13 bis 25, bei der jeder Kanal (12A bis 12G) in Kommunikation mit nur einem Einlaß (8A,8B) des Verteilermittels (4A,4B,5) steht.

## Revendications

1. Procédé de co-extrusion d'un produit alimentaire multicouches, ledit procédé comprenant l'étape consistant à introduire diverses matières alimentaires dans un assemblage à extrusion (6) possédant de multiples conduits juxtaposés (12A à 12G), procédé dans lequel la matière alimentaire passe d'une région en amont des conduits à une région comportant des conduits au nombre de deux ou plus (12A, 12C, 12E, 12G) de l'assemblage à extrusion, les conduits au nombre de deux ou plus étant séparés entre eux par un ou plusieurs autres conduits (12B, 12D, 12F), caractérisé en ce que les diverses matières alimentaires sont introduites dans l'assemblage à extrusion (6) par l'entremise d'un moyen de distribution (4A, 4B, 5), ce moyen de distribution comportant plusieurs orifices d'entrée (8A, 8B), lesdits orifices d'entrée étant adjacents aux extrémités des conduits de l'assemblage à extrusion situées en amont, et en ce que ledit procédé comprend l'étape consistant à introduire les diverses matières alimentaires dans des orifices d'entrée respectifs (8A, 8B) du moyen de distribution à partir desquels elles traversent le moyen de distribution (4A, 4B, 5) et entrent dans les conduits (12A à 12G) de l'assemblage à extrusion, et en ce que les multiples conduits juxtaposés fusionnent au niveau d'un orifice de sortie commun, et la matière alimentaire introduite dans l'un (8A) au moins des orifices d'entrée du moyen de distribution traverse en partant de là le moyen de distribution et entre dans des conduits au nombre de deux ou plus (12A, 12C, 12E, 12G) qui sont séparés entre eux par un ou plusieurs autres conduits (12B, 12D, 12F).

2. Procédé selon la revendication 1, dans lequel la matière alimentaire introduite dans l'un (8A) au moins des orifices d'entrée (8A, 8B) du moyen de distribution (4A, 4B, 5) traverse en partant de là le moyen de distribution et entre dans des conduits alternés (12A, 12C, 12E, 12G) parmi une colonne de conduits constituant certains au moins des multiples conduits juxtaposés (12A à 12G).

3. Procédé selon la revendication 1 ou la revendication 2, dans lequel les diverses matières alimentaires sont au nombre de deux.

4. Procédé selon l'une quelconque des revendications précédentes, dans lequel les conduits (12A à 12G) dans l'assemblage à extrusion (6) sont au nombre de cinq ou plus.

5. Procédé selon l'une quelconque des revendications précédentes, dans lequel les diverses matières alimentaires sont introduites dans le moyen de distribution (4A, 4B, 5) à des pressions différentes.

6. Procédé selon l'une quelconque des revendications précédentes, dans lequel on maintient les matières alimentaires à une température différente de la température ambiante pendant leur passage à travers les conduits juxtaposés (12A à 12G).

7. Procédé selon l'une quelconque des revendications précédentes, dans lequel les matières alimentaires traversent, en partant de l'orifice de sortie commun des conduits juxtaposés, un ajutage (7) qui réduit l'épaisseur des couches extrudées.

8. Procédé selon l'une quelconque des revendications précédentes, dans lequel l'une des matières alimentaires est du chocolat.

9. Procédé selon l'une quelconque des revendications précédentes, dans lequel l'une des matières alimentaires est choisie au sein du groupe comprenant la confiture, la truffe, le fondant, le caramel, le caramel au beurre, le blancmanger, la guimauve, le chocolat aéré, la pâte lisse, les crèmes grasses, les pâtes pompables et les sauces pompables.

10. Procédé selon l'une quelconque des revendications précédentes, dans lequel la profondeur de chaque conduit (12A à 12G) demeure pratiquement constante sur toute sa longueur.

11. Procédé selon l'une quelconque des revendications précédentes, dans lequel la largeur des conduits (12A à 12G) au niveau de l'orifice de sortie est supérieure à la somme des profondeurs des conduits au niveau de l'orifice de sortie.

12. Procédé selon l'une quelconque des revendications précédentes, dans lequel la longueur des conduits (12A à 12G) est supérieure à la largeur des conduits au niveau de l'orifice de sortie.

13. Appareil à extrusion pour produit alimentaire multicouches, ledit appareil comprenant
un assemblage à extrusion (6) possédant de multiples conduits juxtaposés (12A à 12G), des conduits au nombre de deux ou plus (12A, 12C, 12E, 12G) qui sont séparés entre eux par un ou plusieurs autres conduits (12B, 12D, 12F) étant en communication fluide par l'entremise d'une région située en amont des conduits, caractérisé en ce que les conduits multiples fusionnent au niveau d'un orifice de sortie commun, et en ce que ledit appareil comprend un moyen de distribution (4A, 4B, 5) comportant plusieurs orifices d'entrée (8A, 8B), lesdits orifices d'entrée du moyen de distribution étant adjacents aux extrémités des conduits de l'assemblage à extrusion (6) situées en amont, ces orifices d'entrée (8A, 8B) étant destinés à l'introduction de matières alimentaires respectives, appareil dans lequel, en ce qui concerne l'un au moins des orifices d'entrée (8A, 8B) du moyen de distribution, des conduits au nombre de deux ou plus (12A, 12C, 12E, 12G) qui sont séparés entre eux par un ou plusieurs autres conduits (12B, 12D, 12F) sont en communication fluide, par l'entremise de canaux fluides dans le moyen de distribution (4A, 4B, 5), avec le même orifice d'entrée (8A) du distributeur.

14. Appareil selon la revendication 13, dans lequel des conduits alternés (12A, 12C, 12E, 12G) sont en communication fluide, par l'entremise du moyen de distribution (4A, 4B, 5), avec le même orifice d'entrée (8A) du distributeur.

15. Appareil selon la revendication 13 ou la revendication 14, dans lequel les conduits (12A à 12G) présents dans l'assemblage à extrusion (6) sont au nombre de cinq ou plus.

16. Appareil selon l'une quelconque des revendications 13 à 15, comprenant en outre un moyen de chauffage servant à maintenir la température de l'assemblage à extrusion (6) à une température supérieure à la température ambiante.

17. Appareil selon l'une quelconque des revendications 13 à 16, comportant en outre un ajutage (7) conçu pour réduire l'épaisseur des couches extrudées.

18. Appareil selon la revendication 17, dans lequel la largeur de l'ajutage (7) est pratiquement égale à la largeur des conduits (12A à 12G).

19. Appareil selon l'une quelconque des revendications 13 à 18, dans lequel la profondeur de chaque conduit (12A à 12G) demeure pratiquement constante sur toute sa longueur.

20. Appareil selon l'une quelconque des revendications 13 à 19, dans lequel la largeur des conduits (12A à 12G) au niveau de l'orifice de sortie est supérieure à la somme des profondeurs des conduits au niveau de l'orifice de sortie.

21. Appareil selon l'une quelconque des revendications 13 à 20, dans lequel la longueur des conduits (12A à 12G) est supérieure à la somme des profondeurs des conduits au niveau de l'orifice de sortie.

22. Appareil selon l'une quelconque des revendications 13 à 21, dans lequel les conduits (12A à 12G) se forment entre les plaques adjacentes d'une pile de plaques espacées (11A à 11H) attachées ensemble en un assemblage.

23. Appareil selon l'une quelconque des revendications 13 à 22, dans lequel les plaques (11A à 11H) sont fixées ensemble au moyen de tampons fixés entre les plaques et s'étendant le long de bords latéraux opposés des plaques.

24. Appareil selon la revendication 23, dans lequel les plaques (11A à 11H) sont fixées ensemble de manière amovible.

25. Appareil selon l'une quelconque des revendications 13 à 24, dans lequel le moyen de distribution (4A, 4B, 5) comprend plusieurs distributeurs possédant chacun un orifice d'entrée (8A, 8B) et plusieurs orifices de sortie (16A à 16D, 17A à 17C) qui fournissent des canaux de communication fluide entre l'orifice d'entrée du distributeur et plusieurs conduits parmi les multiples conduits (12A à 12G).

26. Appareil selon l'une quelconque des revendications 13 à 25, dans lequel chaque conduit (12A à 12G) communique avec un seul orifice d'entrée (8A, 8B) du moyen de distribution (4A, 4B, 5).
